# EUROPÄISCHE PATENTSCHRIFT

(11) **EP 0 458 921 B1**
(45) Veröffentlichungstag und Bekanntmachung des Hinweises auf die Patenterteilung: **15.02.1995**
(21) Anmeldenummer: 90917705.7
(22) Anmeldetag: 08.12.1990
(51) Int. Cl.: B65G 17/20, B65G 21/22, E01B 25/24

(54) **HÄNGEBAHN MIT SELBSTTRAGENDER PROFILHOHLSCHIENE**
CONVEYOR WITH SELF SUPPORTING SHAPED HOLLOW RAIL
CONVEYOR AVEC RAIL CREUX PROFILE AUTOPORTEUR

(30) Priorität: 15.12.1989 DE 3941459
(43) Veröffentlichungstag der Anmeldung: 04.12.1991
(73) Patentinhaber: TRANSTEX PRODUKTIONSGESELLSCHAFT MBH, 41066 Mönchengladbach (DE)
(72) Erfinder: THUL, Bernd, D-41061 Mönchengladbach (DE)
(74) Vertreter: von Creytz, Dietrich, Dipl.-Phys.
(86) Internationale Anmeldenummer: DE9000947
(87) Internationale Veröffentlichungsnummer: WO9108970

(56) Entgegenhaltungen:
- EP-A- 0 338 500
- FR-A- 1 171 401
- GB-A- 463 392
- US-A- 3 855 937

## Beschreibung

Die Erfindung betrifft eine Hängebahn mit selbsttragender Profilhohlschiene mit zwei auf der Unterseite des Innenraums der Hohlschiene durch einen als Durchlaß eines Tragkörpers einer zu fördernden Last dienenden Längsschlitz getrennten, an sich - abgesehen von Kurven - ebenen Fahrbahnen für je eine Laufrolle eines Laufrollenpaars der Hängebahn, wobei die Laufrollen jedes Laufrollenpaars untereinander durch einen den Tragkörper aufnehmenden Bügel verbunden sind, die Achsen der Laufrollen jedes Laufrollenpaars gegeneinander in Richtung auf den Längsschlitz nach unten geneigt sind und die beiden Fahrbahnen quer zu ihrer Langsrichtung um denselben Winkel Wie die Laufrollenachsen zum Langsschlitz hin nach unten geneigt sind.

Aus der DE-A- 35 35 758 ist eine Laufschiene für Hängeförderbahnen, insbesondere zum Teiletransport in der Textilindustrie, bekannt, die im Querschnitt zwei dachförmig zueinanderweisende, oberseitig je eine Rollenlaufbahn für ein Laufrollenpaar tragende Schenkel aufweist. Die Laufrollen des Laufrollenpaars besitzen schräg zueinander stehende Achsen und werden mit Hilfe eines Bügels zusammengehalten. An dem Bügel kann eine Last befestigt werden. Ein ähnliches Hängefördersystem wird in der DD-A- 260 266 angegeben. Diese Druckschrift bezieht sich in erster Linie auf die Ausbildung einer Weiche im Zuge der Laufschiene.

In der Textilindustrie haben sich die vorgenannten Hängefördersysteme mit allseitig offenen Laufrollen nicht bewährt, weil der dort unvermeidliche Flusenstaub früher oder später zu einer Verstopfung der sich drehenden und bewegenden Teile führt, wenn die Schienen und die Laufrollen nicht ständig gereinigt werden. Aus diesem Grunde ist eine selbsttragende Profilhohlschiene entwickelt worden, die die eigentlichen Laufschienenflächen, die Rollen und gegebenenfalls den an den Rollen hängenden Trolleyzug gegen den Flug- bzw. Flusenstaub abkapseln soll.

Um die Laufeigenschaften eines Hängefördersystems zu stabilisieren und zugleich die Profilhohlschiene gegen Staub möglichst gut abzudichten, wird in der EP-A-0 297 331 vorgeschlagen, ein aus zwei in Fahrtrichtung der Laufrollen parallelen Laufschienen mit je einer Fahrfläche für die Räder aufgespanntes, bis auf einen Längsschlitz für eine nach unten gerichteten Transportgutträger im wesentlichen geschlossenes Gehäuse vorzusehen. Die beiden Fahrflächen innerhalb des Gehäuses werden dabei quer zur Fahrtrichtung voneinander weggeneigt. Dadurch wird das die Laufrollen aufnehmende Gehäuse zwar relativ gut abgedichtet, unvermeidlich doch eindringender Flusen-Staub bleibt aber im Gehäuse und sammelt sich dort. Der sich ansammelnde Schmutz staut sich auf oder neben der Fahrbahnfläche, so daß die Räder von der Fahrbahnfläche nach oben gedrückt werden und schließlich im Innern des Gehäuses klemmen. Da der Staub in Textilfabriken häufig mit Avivagen oder dergleichen versetzt ist, kleben die Staub- und Flusen-Partikel allmählich aneinander, so daß eine Reinigung im allgemeinen ein Auseinanderschrauben der Hohlprofilschiene erfordert.

Ein weiterer Nachteil der aus der EP-A-0 297 331 bekannten Laufschienenanordnung besteht darin, daß der dort vorgesehene Antrieb von oben auf den die Laufrollen verbindenden Tragkörper drückt und dadurch die Anpreßkraft der Laufrollen auf die Laufflächen noch erhöht. Diese Anpreßkraft führt zu einer erhöhten Verdichtung von sich auf den Laufflächen anklammernden Flusenteilen und damit zu einer weiteren Erschwernis jeder Reinigung.

Eine Profilhohlschiene, die derjenigen eingangs genannter Art äußerlich ähnlich ist, aber lediglich als Hängefördersystem in der Bekleidungsindustrie, also zum Aufhängen von Kleiderbügeln, dient, wird in der EP-A-0 338 500 (Fig. 2) beschrieben. In der bekannten Laufschienenanordnung werden die Laufrollen zwar gegenüber Flugstaub bzw. Flusenbefall abgedeckt und die Laufrollen bzw. deren Schienen stehen so, daß etwa trotz Abdeckung an die Laufrollen bzw. Schienen gelangter Schmutz durch Selbstreinigung beim Fahren abgetragen werden kann, die Lagerung der Laufrollen in den Schienen ist aber so instabil, daß ein Hin und Herschaukeln der jeweils eingehängten Bahn um deren Längsachse, also ein wechselweises Abheben der Laufrollen auf der rechten und linken Seite unvermeidlich ist. Eine solche Instabilität mag in der Bekleidungsindustrie hinzunehmen sein, wenn an der Hängeförderbahn eine Kleiderstange befestigt ist, auf der wiederum, z.B. auf Bügeln, Kleidungsstücke hängen, derart, daß eine eventuelle Schaukelbewegung der Hängebahn um deren Längsachse nur gedämpft auf die anhängenden Kleidungsstücke weitergegeben wird, weil diese eine Gegenbewegung um die Kleiderstange ausführen können. Anders ist die Situation, wenn in der Textilindustrie Spulen, z.B. vom Flyer, von der Spinnmaschine oder von der Spulmaschine in einem automatischen Transportsystem einzeln angehängt werden. Ein solches Transportsystem soll in der Lage sein, die Spule an einer Spulenlieferstelle automatisch zu fassen und an einer Spulenabnahmestelle automatisch loszulassen. Entsprechende Greifer besitzen im allgemeinen Drehaufhängungen, die axial in die Hülse der jeweiligen Spule einzuführen sind und eine nahezu freie Rotation um die Hülsenachse und zugleich ein Pendeln in jeder Richtung um einen Punkt erlaubt. Derartige Drehaufhängungen können sich lösen, wenn ruckartige Stöße, wie sie durch eine Schaukelbewegung der Hängeförderbahn verursacht werden, einwirken.

Der Erfindung liegt die Aufgabe zugrunde, Schaukelbewegungen der jeweiligen der Profilhohlschienen laufenden Hängeförderbahn im wesentlichen auszuschließen. Die erfindungsgemäße Lösung besteht für die eingangs genannte profilhohlschiene darin, daß deren Innenraum an der den Fahrbahnen gegenüberliegenden Oberseite Gegendruckflächen als Sperre gegen ein Herausrutschen der Rollen und als Führung der Rollen besitzt und daß die Hängebahn eine unterhalb des Rollenpaars am Tragkörper oder an einer daran befindlichen Tragkette angreifenden Antrieb, insbesondere Reibradantrieb, besitzt.

Erfindungsgemäß werden also die Rollen im Innenraum des Hohlprofils so gelagert, daß sie zwar eine gewisse Beweglichkeit senkrecht zur Achse nach oben besitzen, daß aber das Rollenpaar nicht nach oben aus der Position auf den Fahrbahnen herausrutschen kann. Dazu werden die den Fahrbahnen gegenüberliegenden Innenflächen auf der Oberseite des Hohlprofils als Gegendruckflächen der Rollen ausgebildet. Diese Gegendruckflächen werden normalerweise von den Rollen nicht berührt, sie wirken jedoch als Sperre gegen ein Herausfallen des Rollenpaars aus seiner Position auf den beiden Fahrbahnen.

Für die Selbstreinigung und Reinhaltung des Innenraums des Hohlprofils ist es auch wichtig, daß die Andruckkraft der Rollen auf den zugehörigen Laufflächen möglichst gering gehalten wird, um ein Verdichten und Ankleben von eventuell dort liegendem Schmutz zu vermeiden. In diesem Sinne ist es erfindungsgemäß vorteilhaft, wenn der das Rollenpaar in Transportrichtung vorschiebende Antrieb an den an dem Rollenpaar hängenden Tragkörper bzw. an daran befestigte Teile, z. B. eine Kette, so angreift, daß das auf das Rollenpaar wirkende Gewicht nicht nennenswert vergrößert wird. Vorzugsweise soll der Angriff so erfolgen, daß nicht nur keine Gewichtsvergrößerung sondern eher Gewichtsverminderung auftritt. Um das zu erreichen, wird bei Zusammenfassung mehrerer Rollenpaare als Tragelemente eines Trolleyzugs ein unmittelbar auf den Zug wirkender Antrieb, vorzugsweise als Reibradantrieb, vorgesehen.

Die Zahl der Rollenpaare, die zum Tragen eines Trolleyzugs erforderlich sind, hängt von der Größe der aufzunehmenden Last ab. Wenn beispielsweise in der Textilindustrie Spulen, insbesondere Kreuzspulen oder Flyerspulen, zu tragen sind, kann erfindungsgemäß von jedem Rollenpaar das Gewicht von drei Kreuzspulen oder dergleichen aufgenommen werden, weil das Rollenpaar praktisch nur das Gewicht der daran hängenden Wagen und Spulen, nicht jedoch eine zusätzliche Belastung durch einen Antrieb aufnehmen muß.

Anhand der schematischen Darstellung in der beiliegenden Zeichnung werden Einzelheiten der Erfindung erläutert. Es zeigen:
- Fig. 1: einen Schnitt quer zur Längsrichtung einer Profilhohlschiene mit darin gelagertem Rollenpaar; und
- Fig. 2: eine Seitenansicht einer Profilhohlschiene mit daran hängendem Trolleyzug, teilweise im Schnitt.

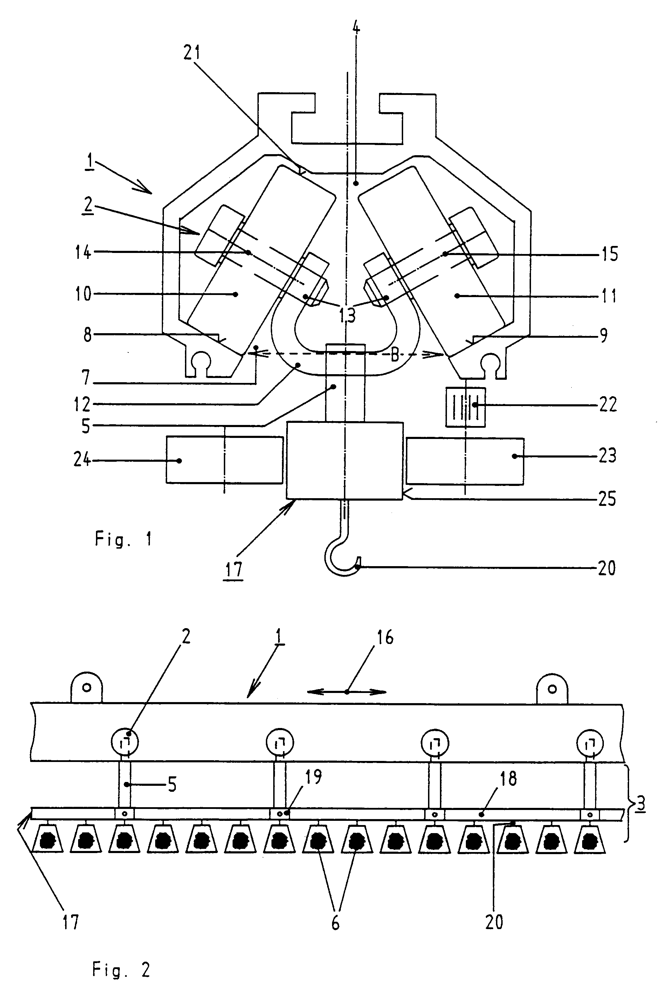

Fig. 1 und 2 zeigen eine insgesamt mit 1 bezeichnete Profilhohlschiene einer auf Laufrollenpaaren 2 verfahrbaren Hängebahn 3 mit zwei auf der Unterseite des Innenraums 4 der Hohlschiene 1 durch einen als Durchlaß eines Tragkörpers 5 einer zu fördernden Last 6 dienenden Längsschlitzes 7 getrennte, in sich - abgesehen vom Kurven - ebenen Fahrbahnen 8 und 9 für je eine Laufrolle 10, 11 jedes Laufrollenpaars 2 der Hängebahn 3.

Erfindungsgemäß werden die Laufrollen 10, 11 jedes Laufrollenpaars 2 untereinander durch einen den Tragkörper 5 aufnehmenden Bügel 12 verbunden. Der Bügel 12 enthält Lager 13 für die Achsen 14, 15 des Laufrollenpaars 2. Die Achsen 14, 15 werden gegeneinander in Richtung auf den Längsschlitz 7 nach unten geneigt. Dieselbe Neigung besitzen die beiden Fahrbahnen 8, 9 quer zu ihrer Längsrichtung bzw. zur Längsrichtung 16 der Profilhohlschiene 1. Die Neigung der Fahrbahnen 8, 9 kann größenordnungsmäßig zwischen 30 und 60° , vorzugsweise bei etwa 45°, liegen. Die Neigung hängt ab von der Breite B des Längsschlitzes und wird so gewählt, daß etwa auf die Fahrbahnen 8,9 fallender Schmutz im Sinne einer Selbstreinigung des Innenraums 4 durch die fahrenden Rollen 10, 11 selbsttätig herabrieseln kann. Um eine möglichst vollständige Reinigung zu erreichen und um ein Festkleben von Schmutz auf den Fahrbahnen 8, 9 im wesentlichen auszuschließen, wird die Breite B des Längsschlitzes 7 möglichst groß, insbesondere groß gegen die Breite der Fahrbahn 8, 9 gebracht. Die Innenfläche der Schiene 1 wird oben als Gegendruckfläche 21 für die Rollen 10, 11 ausgebildet. Die Fläche 21 verhindert ein Herausfallen der Rollen 10, 11 aus der Fahrbahn 8, 9; bei mormaler gerader Fahrt stößt das Rollenpaar 2 nicht an die Gegendruckfläche 21 an.

An dem die Achsen 14, 15 der Laufrollen 10, 11 lagernden und verbindenden Bügel 12 wird ein Tragkörper 5 und an diesen eine Tragkette 17 befestigt. Die Tragkette besteht aus mehreren Tragwagen 18, die durch Gelenkkupplungen 19 miteinander verbunden werden. Jeder Tragwagen 18 besitzt mindestens eine Tragkupplung 20 zum Aufhängen einer Last 21. Im Ausführungsbeispiel werden an jedem Tragwagen 18 im Durchschnitt drei Tragkupplungen 20 vorgesehen; jeweils eine Tragkupplung 20 befindet sich im Bereich der Gelenkkupplung 19, die beiden anderen Tragkupplungen 20 befinden sich zwischen je zwei Gelenkkupplungen 19. Die in Fig. 2 dargestellte Ausführung eignet sich besonders zum Transport von Kreuzspulen in der Textilindustrie.

Der Trolleyzug nach Fig. 1 und 2 besitzt einen Reibradantrieb. Dieser besteht aus einem über einen Motor 22 getriebenen Reibrad 23 mit Gegenrad 24. Auf der Länge der Schiene 1 werden in gewissen Abständen solche Reibradantriebe vorgesehen. Da Reibradantriebe relativ glatte Antriebsflächen 25 an der Tragkette 17 erfordern, werden solche Antriebe in gewissen Abständen jeweils nur an geraden Teilen der Schiene 1 vorgesehen.

### Bezugszeichenliste

- 1: = Profilhohlschiene
- 2: = Laufrollenpaare
- 3: = Hängebahn
- 4: = Innenraum
- 5: = Tragkörper
- 6: = Last
- 7: = Längsschlitz
- 8: = Fahrbahn
- 9: = Fahrbahn
- 10: = Laufrolle
- 11: = Laufrolle
- 12: = Bügel
- 13: = Lager
- 14: = Achse
- 15: = Achse
- 16: = Längsrichtung
- 17: = Tragkette
- 18: = Tragwagen
- 19: = Gelenkkupplung
- 20: = Tragkupplung
- 21: = Gegendruckfläche
- 22: = Motor
- 23: = Reibrad
- 24: = Gegenrad
- 25: = Antriebsfläche

## Patentansprüche

1. Hängebahn (3) mit Selbsttragender Profilhohlschiene (1) mit zwei auf der Unterseite des Innenraums (4) der Hohlschiene (1) durch einen als Durchlaß eines Tragkörpers (5) einer zu fördernden Last (6) dienenden Längsschlitz (7) getrennten, in sich - abgesehen von Kurven - ebenen Fahrbahnen (8, 9) für je eine Laufrolle (10, 11) eines Laufrollenpaars (2) der Hängebahn (3), wobei die Laufrollen (10, 11) jedes Laufrollenpaars (2) untereinander durch einen den Tragkörper (5) aufnehmenden Bügel (12) verbunden sind, die Achsen (14, 15) der Laufrollen (10, 11) jedes Laufrollenpaars (2) gegeneinander in Richtung auf den Längsschlitz (7) nach unten geneigt sind und die beiden Fahrbahnen (8, 9) quer zu ihrer Längsrichtung (16) um denselben Winkel wie die Laufrollenachsen (14, 15) zum Längsschlitz (7) hin nach unten geneigt sind,
**dadurch gekennzeichnet,**
daß der Innenraum (4) an der den Fahrbahnen (8, 9) gegenüberliegenden Oberseite Gegendruckflächen (21) als Sperre und Führung der Rollen (10, 11) besitzt und daß die Hängebahn (3) eine unterhalb des Rollenpaars (2) am Tragkörper (5) oder an einer daran befindlichen Tragkette (17) angreifenden Antrieb, insbesondere als Reibradantrieb (22, 23, 24), besitzt.

## Claims

1. Overhead track (3) with self-supporting profiled hollow rail (1) with two carriageways (8, 9) for a respective wheel (10, 11) of a pair (2) of wheels of the overhead track (3), the carriageways (8, 9) being plane in themselves - apart from curves - and being separated by a slot (7) serving as a passage for a carrier (5) of a load (6) to be conveyed, on the underside of the interior (4) of the hollow rail (1), wherein the wheels (10, 11) of each pair (2) of wheels are connected to one another by a stirrup (12) receiving the carrier (5), the axles (14, 15) of the wheels (10, 11) of each pair (2) of wheels are inclined downwardly toward one another in the direction of the slot (7) and the two carriageways (8, 9) are inclined downwardly transversely to their longitudinal direction (16) at the same angle as the wheel axles (14, 15) toward the slot (7), characterised in that the interior (4) on the upper side opposite the carriageways (8, 9) has counter-pressure surfaces (21) as a barrier and guide for the wheels (10, 11) and in that the overhead track (3) has a drive, in particular as a friction wheel drive (22, 23, 24) acting beneath the pair (2) of wheels on the carrier (5) or on a carrying chain (17) located thereon.

## Revendications

1. Voie suspendue (3) à rail creux profilé autoporteur (1) incluant deux voies de roulement (8, 9) planes en soi - abstraction faite des courbes - séparées sur le côté inférieur de l'espace intérieur (4) du rail creux (1) par une fente longitudinale (7) servant au passage d'un corps porteur (5) d'une charge (6) à transporter, et destinée chacune à un galet de roulement (10, 11) d'une paire (2) de galets de roulement de la voie suspendue (3), les galets de roulement (10, 11) de chaque paire (2) de galets de roulement étant reliés entre eux par un étrier (12) qui reçoit le corps porteur (5), les axes (14, 15) des galets de roulement (10, 11) de chaque paire (2) de galets de roulement étant inclinés vers le bas l'un vers l'autre en direction de la fente longitudinale (7) et les deux voies de roulement (8, 9) étant inclinées vers le bas, du même angle que les axes (14, 15) des galets de roulement, en direction de la fente longitudinale (7) transversalement à leur direction longitudinale (16),
caractérisée en ce que
l'espace intérieur (4) possède, sur le côté supérieur opposé aux voies de roulement (8, 9), des surfaces (21) de contre-appui agissant en tant que bloqueur et glissière de guidage des galets (10, 11) et en ce que la voie suspendue (3) possède un entraînement, en particulier un entraînement par friction (22, 23, 24) , agissant au-dessous de la paire (2) de galets sur le corps porteur (5) ou sur une chaîne porteuse (17) qui s'y trouve.
